# EUROPEAN PATENT APPLICATION

(11) **EP 3 213 653 A1**
(43) Date of publication of application: **06.09.2017**
(21) Application number: 17158617.5
(22) Date of filing: 01.03.2017
(51) Int. Cl.: A44B 11/25

(54) **BUCKLE DEVICE**

(30) Priority: 04.03.2016 JP 2016042582
(71) Applicant: Kabushiki Kaisha Tokai Rika Denki Seisakusho, Ohguchi-cho Niwa-gun Aichi 480-0134 (JP)
(72) Inventor: MORI, Shinji, Niwa-gun, Aichi 480-0134 (JP); SUZUKI, Tomotaka, Niwa-gun, Aichi 480-0134 (JP); OKUHIRA, Tomohiro, Niwa-gun, Aichi 480-0134 (JP)
(74) Representative: TBK

(57) **Abstract**

In a buckle device, latch rotation shafts (58) of a latch (46) are supported by body shaft receiving portions (60) of a buckle body (18) further to the device rear side than a support shaft (40) that supports a buckle device side of a coupling member. The latch (46) is rotated in one direction about the latch rotation shafts (58), such that a latch engagement portion (62) of the latch (46) engages with a tongue further toward the device front side than the support shaft (40). Such a configuration enables a rotation radius of the latch (46) to be suppressed from becoming smaller even if the buckle device is made more compact.

## Description

### BACKGROUND

### Field of the Invention

The present invention relates to a buckle device that engages with a tongue of a seatbelt device.

### Related Art

Buckle devices exist in which a latch supported by a buckle body is rotated to enable the latch to engage with a tongue (see, for example, Japanese Patent Application Laid-Open (JP-A) No. 2006-122552). In such buckle devices, it would be conceivable to make the latch more compact in order to make the buckle device more compact. However, a rotation radius of the latch would become smaller if the latch were made more compact.

### SUMMARY

In consideration of the above circumstances, a buckle device capable of suppressing a rotation radius of a latch from becoming smaller is obtained.

A buckle device of a first aspect includes: a buckle body that is coupled to a coupling member coupled to a vehicle body side; and a latch that is supported by the buckle body further to one side of the buckle body than a coupling portion where the coupling member is coupled to the buckle body so as to be capable of rotating, and that, by being rotated, is configured to engage with a tongue of a seatbelt device further to another side of the buckle body than the coupling portion.

In the buckle device of the first aspect, the latch is supported by the buckle body further to the one side of the buckle body than the coupling portion such that the latch is configured to rotate (capable of rotating). By being rotated, the latch is configured to engage with the tongue of the seatbelt device further to the another side of the buckle body than the coupling portion. Thus, for example, even if the buckle body is made more compact (smaller) in a direction from the one side toward the another side of the buckle body, a rotation radius of the latch, which is from the rotation center of the latch to an engagement portion with the tongue can be suppressed from becoming smaller.

Note that the one side and the another side of the buckle body correspond to one side and another side in a direction from a front side to a rear side of the buckle body (in an insertion direction of the tongue to the buckle device).

A buckle device of a second aspect is the buckle device of the first aspect, further including: a rotation shaft that is provided at one of the buckle body or the latch; a shaft receiving section that is provided at another of the buckle body or the latch, and that engages with the rotation shaft such that the latch is supported by the buckle body so as to be capable of rotating, a part of the shaft receiving section being open toward a radial direction side of rotation of the latch such the rotation shaft is capable of relative movement toward an open side of the shaft receiving section; and a restricting section that is provided at the buckle body so as to abut one of the rotation shaft or the shaft receiving section, which is provided at the latch, and that restricts relative movement of the rotation shaft toward the open side of the shaft receiving section.

In the buckle device of the second aspect, the part of the shaft receiving section is open toward the rotation radial direction side of the latch, such the rotation shaft that has engaged with the shaft receiving section is capable of relative movement toward the open side of the shaft receiving section with respect to the shaft receiving section. This enables the rotation shaft to be easily made to engage with the shaft receiving section from the open side of the shaft receiving section. Moreover, in a state in which the restricting section is provided at the buckle body, the restricting section abuts the one of the rotation shaft or the shaft receiving section, which one is provided at the latch, and thereby restricts the relative movement of the rotation shaft toward the open side of the shaft receiving section. This enables the rotation shaft to be suppressed from coming out through the open side of the shaft receiving section.

A buckle device of a third aspect is the buckle device of the second aspect, wherein the restricting section couples the coupling member to the buckle body.

In the buckle device of the third aspect, the coupling member is coupled to the buckle body by the restricting section. Thus, there is no need to provide a special member simply to suppress the rotation shaft from coming out through the open side of the shaft receiving section, thereby enabling an increase in the number of components to be suppressed.

A buckle device of a fourth aspect is the buckle device of the first aspect, wherein: the buckle body includes a body bottom wall having a thickness direction that intersects with a direction running from the one side to the another side of the buckle body; and the coupling portion is formed at the buckle body so as to be separated from the body bottom wall in the thickness direction of the body bottom wall.

In other words, a buckle device of a fourth aspect is the buckle device of the second or third aspect, wherein: the buckle body includes a body bottom wall having a thickness direction that intersects with a direction running from the one side to the another side of the buckle body; and the restricting section is separated from the body bottom wall in the thickness direction of the body bottom wall.

In the buckle device of the fourth aspect, the coupling portion is formed at the buckle body so as to be separated from the body bottom wall in the thickness direction of the body bottom wall. In other words, the restricting section is separated from the body bottom wall in the thickness direction of the body bottom wall.
This enables a member provided at the body bottom wall, or a hole formed in the body bottom wall, for example, to be disposed facing the coupling portion (in other words, the restricting section) in the thickness direction of the body bottom wall.
In the above mentioned aspects , it is possible that the restricting section is supported at the coupling portion of the buckle body.

As explained above, the buckle device according to the aspects is capable of suppressing the rotation radius of the latch from becoming smaller.

### BRIEF DESCRIPTION OF THE DRAWINGS

Exemplary embodiments will be described in detail with reference to the following figures, wherein:
Fig. 1 is a side cross-section of a buckle device according to a first exemplary embodiment;
Fig. 2 is a cross-section corresponding to Fig. 1, illustrating a state in which a latch has engaged with a tongue;
Fig. 3 is an exploded perspective view of a buckle body, a support shaft, a latch, and a pressure receiving member;
Fig. 4 is an exploded perspective view of a latch, a pressure receiving member, and a rivet of a buckle device according to a second exemplary embodiment; and
Fig. 5 is an exploded perspective view of a buckle body, a support shaft, a latch, a pressure receiving member, an ejector, and a pressure plate of a buckle device according to a third exemplary embodiment.

### DETAILED DESCRIPTION

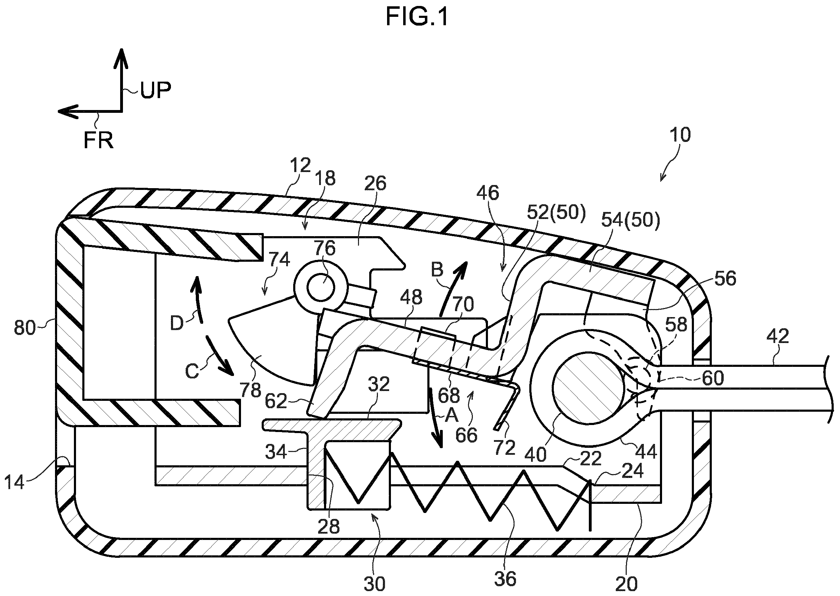

Explanation follows regarding exemplary embodiments, based on the respective drawings, Fig. 1 to Fig. 5. Note that in each of the drawings, the arrow FR indicates a device front side of a buckle device 10, the arrow LH indicates a device left side of the buckle device 10, and the arrow UP indicates a device upper side of the buckle device 10. When explaining each of the exemplary embodiments, locations in the exemplary embodiment being explained that are basically the same as those in an exemplary embodiment previously described are appended with the same reference numerals, and detailed explanation thereof is omitted.

### Configuration of First Exemplary Embodiment

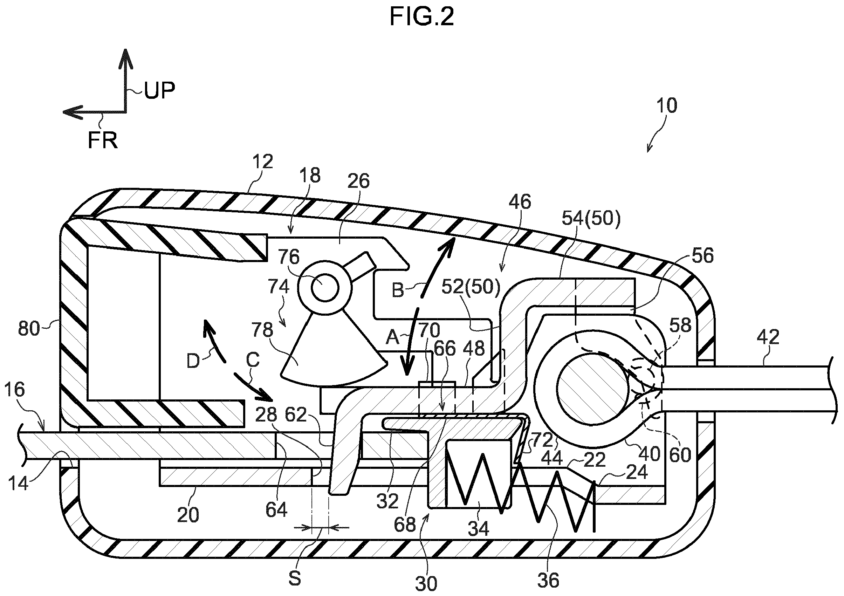

As illustrated in Fig. 1, the buckle device 10 includes a case 12 configuring a buckle main body. The case 12 is formed using a synthetic resin material, and is open at both side end portions in the device front-rear direction of the case 12. A device lower side portion of the open portion at the device front side of the case 12 configures a tongue insertion port 14. As illustrated in Fig. 2, part of a tongue 16 provided to webbing of a seatbelt device is inserted into the case 12 from the device front side of the case 12 through the tongue insertion port 14.

A buckle body 18, configuring the buckle main body together with the case 12, is provided inside the case 12. The buckle body 18 is formed using a metal such as iron or stainless steel, for example. The buckle body 18 includes a body bottom wall 20. The body bottom wall 20 is formed in a plate shape, and the thickness direction of the body bottom wall 20 runs along the device up-down direction. A bottom wall first bend portion 22 is provided at a device rear side portion of the body bottom wall 20, and the body bottom wall 20 bends toward the device lower side at the bottom wall first bend portion 22. A bottom wall second bend portion 24 is provided further toward the device rear side than the bottom wall first bend portion 22 at the body bottom wall 20, and the body bottom wall 20 bends toward the device rear side at the bottom wall second bend portion 24.

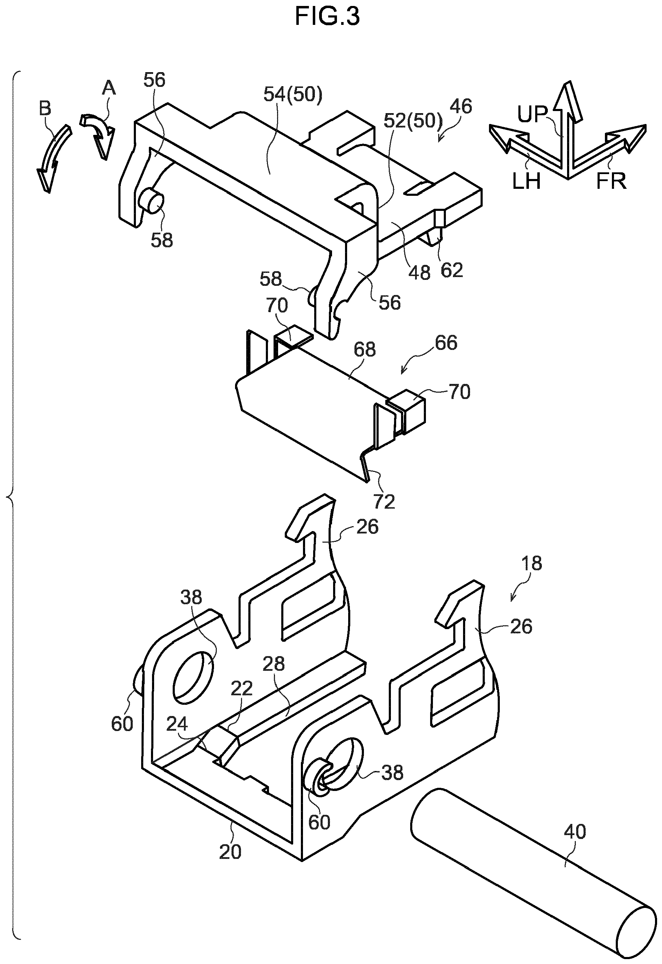

As illustrated in Fig. 3, body side walls 26 are respectively formed on both device left-right direction sides of the body bottom wall 20 of the buckle body 18. The body side walls 26 are each formed in a plate shape, and the body side walls 26 extend toward the device upper side from respective end portions on the left and right direction sides of the body bottom wall 20 of the buckle body 18. Having been inserted into the case 12, the tongue 16 is disposed between both body side walls 26 of the buckle body 18 at the device upper side of the body bottom wall 20 of the buckle body 18.

As illustrated in Fig. 1 and Fig. 3, a bottom wall hole portion 28 is formed in the body bottom wall 20 of the buckle body 18. The bottom wall hole portion 28 pierces through the body bottom wall 20 in the device up-down direction of the body bottom wall 20. As illustrated in Fig. 1, an ejector 30 is disposed passing through inside the bottom wall hole portion 28 of the buckle body 18. The ejector 30 includes an ejector plate portion 32. The ejector plate 32 is formed in a plate shape, and an ejector wall portion 34 is formed on the device lower side of the ejector plate portion 32. The ejector wall portion 34 configures a U shape open toward the device rear side as viewed in the device up-down direction.

Having been inserted into the case 12, a device rear side portion of the tongue 16 enters between the body bottom wall 20 of the buckle body 18 and the ejector plate portion 32 of the ejector 30. When the tongue 16 is moved toward the device rear side in this state, the ejector wall portion 34 of the ejector 30 is pressed toward the device rear side by the tongue 16. The ejector 30 is accordingly moved toward the device rear side (see Fig. 2).

As illustrated in Fig. 1, an ejector urging spring 36, this being one aspect of a member provided at the body bottom wall 20, is provided inside the bottom wall hole portion 28 of the buckle body 18. The ejector urging spring 36 is configured by a compressed coil spring, and one side end portion of the ejector urging spring 36 engages with a device rear side end portion of the bottom wall hole portion 28 of the buckle body 18. Another side end portion of the ejector urging spring 36 enters inside the ejector wall portion 34 of the ejector 30, and the ejector 30 is urged toward the device front side by the ejector urging spring 36.

As illustrated in Fig. 3, side wall circular holes 38 are respectively formed in device rear side portions of both body side walls 26 of the buckle body 18. The side wall circular holes 38 of both body side walls 26 have the same shape as each other, and are formed coaxially in the device left-right direction. A support shaft 40, serving as a supporting member and a restricting section, is provided at the buckle body 18. The support shaft 40 is formed in a circular column shape, and the axial direction of the support shaft 40 runs along the device left-right direction. An external diameter dimension of the support shaft 40 is substantially the same as (strictly speaking, is slightly smaller than) an internal diameter dimension of the side wall circular holes 38 of both body side walls 26 of the buckle body 18. The support shaft 40 is disposed passing (piercing) through and is supported at the side wall circular holes 38 of both body side walls 26, such that the support shaft 40 faces a device rear side portion of the bottom wall hole portion 28 of the buckle body 18 in the device up-down direction.

As illustrated in Fig. 1, the buckle device 10 includes a coupling member 42. The coupling member 42 is formed using a belt shaped flexible member, for example. A device rear side portion of the coupling member 42 is coupled to and supported by a vehicle body side section such as a floor section of the vehicle or a frame member of a seat, beside the seat or at the vehicle lower side of the seat, applied with the buckle device 10. A device front side portion of the coupling member 42 is inserted into the case 12 through the open portion on the device rear side of the case 12, and is disposed between both body side walls 26 of the buckle body 18.

A loop portion 44 is formed in the device front side portion of the coupling member 42. The support shaft 40 is disposed piercing through the loop portion 44 of the coupling member 42. Thus, the device front side portion of the coupling member 42 is supported by the support shaft 40, and the buckle body 18 is coupled to the vehicle body side section via the coupling member 42.

As illustrated in Fig. 1 and Fig. 3, the buckle device 10 also includes a latch 46 serving as a lock member. The latch 46 includes a latch base section 48. The latch base section 48 is formed in a plate shape. A latch bypass section 50 is provided on the device rear side of the latch base section 48. The latch bypass section 50 includes a bypass first plate portion 52. The bypass first plate portion 52 of the latch bypass section 50 extends toward substantially the device upper side from a device rear side end of the latch base section 48, and extends further toward the device upper side than the device rear side portions of the body side walls 26 of the buckle body 18.

A bypass second plate portion 54 of the latch bypass section 50 extends substantially toward the device rear side from a device upper side end of the bypass first plate portion 52 of the latch bypass section 50. Both device left-right direction end portions of a device rear side portion of the bypass second plate portion 54 of the latch bypass section 50 extend further toward the respective device left-right direction outsides than the both body side walls 26 of the buckle body 18 respectively. Rotation shaft formation portions 56 are respectively formed at both device left-right direction ends of the device rear side portion of the bypass second plate portion 54 of the latch bypass section 50.

As illustrated in Fig. 3, the rotation shaft formation portions 56 are each formed in a plate shape. A device lower side portion of each rotation shaft formation portion 56 is disposed further toward the device rear side than the support shaft 40. Latch rotation shafts 58, serving as rotation shaft, are respectively formed at the device lower side portions of the rotation shaft formation portions 56. Each latch rotation shaft 58 is configured in a circular column shape, and the axial direction of each latch rotation shaft 58 runs along the device left-right direction. The latch rotation shafts 58 are each formed by pressing part of the respective rotation shaft formation portion 56 toward a center side in the device left-right direction, such that leading end sides in the central axial direction of the latch rotation shafts 58 project out further toward the center side in the device left-right direction than the respective rotation shaft formation portions 56.

Body shaft receiving sections 60, serving as shaft receiving section, are respectively formed at both body side walls 26 of the buckle body 18, so as to correspond to the respective latch rotation shafts 58 of the latch 46. The body shaft receiving sections 60 are formed further toward the device rear side than the side wall circular holes 38 of the body side walls 26 of the buckle body 18, and project out toward the device left-right direction outsides from device left-right direction outside faces of both body side walls 26 of the buckle body 18 respectively. The body shaft receiving sections 60 of both body side walls 26 of the buckle body 18 are each formed in a substantially C shape open toward the device front side as viewed along the device left-right direction. Both latch rotation shafts 58 of the latch 46 can be inserted into the respective body shaft receiving sections 60 from the device front side of the body shaft receiving sections 60 of both body side walls 26 of the buckle body 18.

When the support shaft 40 is pierced (passed) through both side wall circular holes 38 of the buckle body 18 and the support shaft 40 is attached to the buckle body 18 in a state in which both latch rotation shafts 58 of the latch 46 have been inserted into both body shaft receiving sections 60 of the buckle body 18 in this manner, an outer circumferential face of the support shaft 40 abuts outer circumferential faces of both latch rotation shafts 58 at the device front side of both latch rotation shafts 58 of the latch 46. Movement of the latch rotation shafts 58 of the latch 46 toward the device front side is restricted (prevented) by the support shaft 40 in this state. The latch rotation shafts 58 of the latch 46 are thereby restricted (prevented) from coming out of the respective body shaft receiving sections 60 of the buckle body 18, and the latch rotation shafts 58 of the latch 46 are supported so as to be capable of rotating (pivoting) about the central axis of the latch rotation shafts 58 (the arrow A direction and the arrow B direction in Fig. 3, etc.) by the body shaft receiving sections 60 of the buckle body 18.

As illustrated in Fig. 1 and Fig. 3, a latch engagement portion 62 is provided on the device front side of the latch base section 48 of the latch 46. The latch engagement portion 62 extends substantially toward the device lower side from a device front side end of the latch base section 48 of the latch 46. In a non-inserted state of the tongue (the state illustrated in Fig. 1) in which the tongue 16 has not been inserted into the case 12, a leading end of the latch engagement portion 62 of the latch 46 abuts a device upper side face of the ejector plate portion 32 of the ejector 30, such that rotating of the latch 46 in a latch engagement direction (the arrow A direction in Fig. 1, etc.), this being one direction about the latch rotation shafts 58, is restricted.

When the ejector 30 is moved toward the device rear side due to the ejector 30 being pressed by the tongue 16 that has been inserted into the case 12, the leading end of the latch engagement portion 62 of the latch 46 faces a tongue engagement hole 64 formed in the tongue 16, and the latch 46 is able to rotate in the latch engagement direction (the arrow A direction in Fig. 1, etc.). As illustrated in Fig. 2, the latch engagement portion 62 of the latch 46 is thereby disposed piercing (passing) through the tongue engagement hole 64 formed in the tongue 16, and a leading end portion of the latch engagement portion 62 of the latch 46 enters the bottom wall hole portion 28 of the buckle body 18 due to the latch 46 being rotated in the latch engagement direction in this manner. Movement of the tongue 16 toward the device front side is thereby restricted by the latch engagement portion 62 of the latch 46.

As illustrated in Fig. 1 and Fig. 3, a pressure receiving member 66 is provided at the latch 46. The pressure receiving member 66 includes a pressure receiving member plate portion 68. The pressure receiving member plate portion 68 is formed in a plate shape that is thinner than the latch base section 48 of the latch 46. The pressure receiving member plate portion 68 is disposed on the device lower side of the latch base section 48 of the latch 46.

Pressure receiving member attachment tabs 70 are respectively provided at both device left-right direction side ends of a device front side portion of the pressure receiving member plate portion 68 of the pressure receiving member 66. The pressure receiving member attachment tabs 70 extend toward the device upper side from both the device left-right direction side ends of the device front side portion of the pressure receiving member plate portion 68 of the pressure receiving member 66. The pressure receiving member attachment tabs 70 of the pressure receiving member 66 pass respective width direction sides of the latch base section 48 of the latch 46, and respective device upper side portions of the pressure receiving member attachment tabs 70 of the pressure receiving member 66 are bent, and caulked or crimped toward the vehicle width direction center side of the latch base section 48 of the latch 46, so as to be engaged with the latch base section 48 of the latch 46. The pressure receiving member 66 is thereby fixed to the latch base section 48 of the latch 46.

A pressure receiving member abutting portion 72 is provided at the device rear side of the pressure receiving member plate portion 68 of the pressure receiving member 66. The pressure receiving member abutting portion 72 extends substantially toward the device lower side from a device rear side end of the pressure receiving member plate portion 68 of the pressure receiving member 66. The pressure receiving member abutting portion 72 faces a device rear side end of the ejector plate portion 32 of the ejector 30 from the device rear side. The latch 46 is rotated in the latch engagement direction (the arrow A direction in Fig. 1, etc.) when the pressure receiving member abutting portion 72 of the pressure receiving member 66 is pressed toward the device rear side by the device rear side end of the ejector plate portion 32 of the ejector 30 that has been pressed by the tongue 16 and moved toward the device rear side.

As illustrated in Fig. 1, a lock piece 74 is provided on the device front side of the latch 46. The lock piece 74 includes a lock piece rotation shaft 76. The length direction of the lock piece rotation shaft 76 runs along the device left-right direction, and both length direction end portions of the lock piece rotation shaft 76 are respectively supported by both body side walls 26 of the buckle body 18 so as to be capable of rotating. The lock piece 74 includes a lock piece abutting portion 78. The lock piece abutting portion 78 is integrally formed to the lock piece rotation shaft 76.

The lock piece abutting portion 78 of the lock piece 74 receives urging force of a lock piece urging mechanism configured using a compression coil spring or the like. The lock piece 74 is thereby urged in a locking direction (the arrow C direction in Fig. 1, etc.), this being a locking direction. The lock piece abutting portion 78 of the lock piece 74 thereby abuts a device front side face of the latch engagement portion 62 of the latch 46. Further rotating of the lock piece 74 in the locking direction (the arrow C direction in Fig. 1, etc.), this being one direction about the lock piece rotation shaft 76, is thereby restricted by the latch engagement portion 62 of the latch 46.

When the restriction on rotating of the lock piece 74 by the latch 46 is released due to the latch 46 being rotated in the latch engagement direction (the arrow A direction in Fig. 1, etc.), the lock piece 74 is rotated in the locking direction (the arrow C direction in Fig. 1, etc.) by the urging force of the lock piece urging mechanism. The lock piece 74 accordingly abuts a device upper side face of a device front side end portion of the latch base section 48 of the latch 46. Rotating of the latch 46 in a latch release direction (the arrow B direction in Fig. 1, etc.), this being another direction about the latch rotation shafts 58, is thereby restricted.

The buckle device 10 also includes a release button 80. The release button 80 is provided inside a device front side portion of the case 12. The release button 80 is capable of sliding along the device front-rear direction.

When the release button 80 is slid toward the device rear side in a state in which rotating of the latch 46 in the latch release direction (the arrow B direction in Fig. 1, etc.) has been restricted by the lock piece abutting portion 78 of the lock piece 74, the lock piece 74 is pressed by part of the release button 80, and the lock piece 74 is thereby rotated in a lock release direction (the arrow D direction in Fig. 1, etc.), this being another direction about the lock piece rotation shaft 76. This accordingly releases the restriction on rotating of the latch 46 in the latch release direction (the arrow B direction in Fig. 1, etc.) by the lock piece abutting portion 78 of the lock piece 74. Duethereto, when the tongue 16 receives the urging force of the ejector urging spring 36 through the ejector 30 and is moved toward the device front side, the latch engagement portion 62 of the latch 46 is pressed by an inside portion of the tongue engagement hole 64 of the tongue 16, such that the latch 46 is rotated in the latch release direction (the arrow B direction in Fig. 1, etc.).

### Operation and Advantageous Effects of First Exemplary Embodiment

From the non-inserted state of the tongue in the buckle device 10, illustrated in Fig. 1, the tongue 16 is inserted into the case 12 through the tongue insertion port 14 of the case 12, and when the tongue 16 is moved toward the device rear side in this state, a device rear side end portion of the tongue 16 is inserted between the ejector plate portion 32 of the ejector 30 and the body bottom wall 20 of the buckle body 18, and the device rear side end of the tongue 16 abuts a device front side face of the ejector wall portion 34 of the ejector 30.

When the tongue 16 is moved toward the device rear side against the urging force of the ejector urging spring 36 in this state, the ejector 30 is pressed by the tongue 16 and is moved toward the device rear side. The state in which the leading end of the latch engagement portion 62 of the latch 46 and the device upper side face of the ejector plate portion 32 of the ejector 30 face each other is thereby released. When the ejector 30 is pressed further by the tongue 16 and moves further toward the device rear side, the device rear side end of the ejector plate portion 32 of the ejector 30 abuts the pressure receiving member abutting portion 72 of the pressure receiving member 66 provided at the latch 46, and the leading end of the latch engagement portion 62 of the latch 46 faces the tongue engagement hole 64 of the tongue 16.

When the ejector 30 is pressed further by the tongue 16 and is moved further toward the device rear side in this state in this state, the pressure receiving member abutting portion 72 of the pressure receiving member 66 is pressed by the device rear side end of the ejector plate portion 32 of the ejector 30, and the latch 46 is accordingly rotated in the latch engagement direction (the arrow A direction in Fig. 1, etc.). The latch engagement portion 62 of the latch 46 is thereby disposed piercing through the tongue engagement hole 64 of the tongue 16, and the leading end portion of the latch engagement portion 62 of the latch 46 enters the bottom wall hole portion 28 of the buckle body 18.

When the latch 46 is rotated further in the latch engagement direction (the arrow A direction in Fig. 1, etc.), the restriction on rotating of the lock piece 74 by the latch engagement portion 62 of the latch 46 is released. When the lock piece 74 is thereby rotated in the locking direction (the arrow C direction in Fig. 1, etc.) by the urging force of the lock piece urging mechanism, rotating of the latch 46 in the latch release direction (the arrow B direction in Fig. 1, etc.) is restricted by the lock piece abutting portion 78 of the lock piece 74 (the state illustrated in Fig. 2).

The state illustrated in Fig. 2 is a retained state of the tongue, in which movement of the tongue 16 toward the device front side is restricted and the tongue 16 is retained by the buckle device 10. When the webbing of the seatbelt device is wrapped across the body of an occupant seated in the seat applied with the buckle device 10 in this state, a state arises in which the webbing is worn on the body of the occupant, and the body of the occupant is restrained by the webbing.

In the state in which the webbing is worn on the body of the occupant, when the release button 80 of the buckle device 10 is pressed and the release button 80 is slid toward the device rear side, the lock piece 74 is pressed by the part of the release button 80, and the lock piece 74 is thereby rotated in the lock release direction (the arrow D direction in Fig. 2, etc.). When the restriction on rotating of the latch 46 in the latch release direction (the arrow B direction in Fig. 2, etc.) by the lock piece abutting portion 78 of the lock piece 74 is thereby released, the tongue 16 is moved toward the device front side by the urging force of the ejector urging spring 36 received through the ejector 30.

When the latch engagement portion 62 of the latch 46 is thereby pressed by the inside portion of the tongue engagement hole 64 of the tongue 16, the latch 46 is rotated in the latch release direction (the arrow B direction in Fig. 2, etc.). Thus, the restriction on movement of the tongue 16 toward the device front side by the latch engagement portion 62 of the latch 46 is released, enabling the tongue 16 to be taken out of the case 12, and enabling the occupant to remove the webbing from their body.

In the buckle device 10, the body shaft receiving sections 60 are respectively formed to both body side walls 26 of the buckle body 18 further toward the device rear side (namely, toward the fixing portion side of the coupling member 42 to the vehicle body) than the side wall circular holes 38 of both body side walls 26 of the buckle body 18 (namely, the support position of the support shaft 40 supporting the coupling member 42 in the buckle body 18), and the latch rotation shafts 58 of the latch 46 are supported by the buckle body 18 further toward the device rear side than the support shaft 40. Thus, for example, even if a device front-rear direction dimension of the buckle body 18 and the case 12 is shortened to make the buckle device 10 more compact, the length from the center of the latch rotation shafts 58 of the latch 46 to the latch engagement portion 62 of the latch 46, namely, a rotation radius of the latch engagement portion 62 about the latch rotation shafts 58, can be suppressed from becoming shorter.

Being able to suppress the rotation radius of the latch engagement portion 62 of the latch 46 about the latch rotation shafts 58 from becoming shorter in this manner enables a rotate angle of the latch 46, between the non-inserted state of the tongue illustrated in Fig. 1 and the retained state of the tongue illustrated in Fig. 2, to be suppressed from becoming larger.

As illustrated in Fig. 2, in the state in which the leading end portion of the latch engagement portion 62 of the latch 46 has entered the bottom wall hole portion 28 of the buckle body 18, the leading end portion of the latch engagement portion 62 of the latch 46 is positioned further toward the device lower side than the latch rotation shafts 58 of the latch 46. Thus, by rotating the latch engagement portion 62 of the latch 46 in the another direction (the arrow B direction in Fig. 2, etc.) about the latch rotation shafts 58 in this state, the leading end portion of the latch engagement portion 62 of the latch 46 is displaced toward the device front side while being displaced toward the device upper side. A gap S is accordingly set between the leading end portion of the latch engagement portion 62 of the latch 46 and a device front side end of the bottom wall hole portion 28 of the buckle body 18 in the state in which the leading end portion of the latch engagement portion 62 of the latch 46 has entered the bottom wall hole portion 28 of the buckle body 18.

Note that in the buckle device 10, the rotation radius of the latch engagement portion 62 of the latch 46 about the latch rotation shafts 58 can be suppressed from becoming shorter, and further, the rotate angle of the latch 46, from the state in which the leading end portion of the latch engagement portion 62 of the latch 46 has entered the bottom wall hole portion 28 of the buckle body 18 to when the leading end portion of the latch engagement portion 62 of the latch 46 comes out of the bottom wall hole portion 28 of the buckle body 18, can be suppressed from becoming larger. This enables a displacement amount of the leading end portion of the latch engagement portion 62 of the latch 46 toward the device front side, from the state in which the leading end portion of the latch engagement portion 62 of the latch 46 has entered the bottom wall hole portion 28 of the buckle body 18 to when the leading end portion of the latch engagement portion 62 of the latch 46 comes out of the bottom wall hole portion 28 of the buckle body 18, to be suppressed from becoming larger. This enables the gap S (see Fig. 2) between the leading end portion of the latch engagement portion 62 of the latch 46 and the device front side end of the bottom wall hole portion 28 of the buckle body 18 to be suppressed from becoming larger.

During a vehicle emergency such as a vehicle collision, the webbing of the seatbelt device is pulled due to the occupant attempting to move under inertia toward the vehicle front side. Thus, the tongue 16 is pulled toward the device front side by the webbing, and the latch engagement portion 62 of the latch 46 is pressed toward the device front side by a device rear side end of the tongue engagement hole 64 of the tongue 16. When pressing force acting on the latch engagement portion 62 of the latch 46 from the device rear side end of the tongue engagement hole 64 of the tongue 16 exceeds the bending strength of the latch engagement portion 62, the latch 46 is deformed such that the latch engagement portion 62 is rotated about its base end portion (an end portion on the latch base section 48 side of the latch engagement portion 62).

Note that as described above, in the buckle device 10, the gap S (see Fig. 2) between the leading end portion of the latch engagement portion 62 of the latch 46 and the device front side end of the bottom wall hole portion 28 of the buckle body 18 can be suppressed from becoming larger. Thus, the latch engagement portion 62 of the latch 46 can be made to abut the device front side end of the bottom wall hole portion 28 of the buckle body 18 prior to the latch 46 being greatly deformed due to the latch engagement portion 62 of the latch 46 being pressed toward the device front side by the device rear side end of the tongue engagement hole 64 of the tongue 16. This enables deformation of the latch 46 to be suppressed, and enables the restriction on movement of the tongue 16 toward the device front side by the latch 46 to be maintained.

In the buckle device 10, the latch rotation shafts 58 of the latch 46 are supported so as to be capable of rotating by the body shaft receiving sections 60 of the body side wall 26 of the buckle body 18. Note that the body shaft receiving sections 60 of the body side wall 26 of the buckle body 18 are each formed in a substantially C shape open toward the device front side as viewed along the device left-right direction, and both latch rotation shafts 58 of the latch 46 can be respectively inserted into the body shaft receiving sections 60 from the device front side of the body shaft receiving sections 60 of both body side walls 26 of the buckle body 18. This facilitates assembly of the latch 46 to the buckle body 18.

Moreover, when the support shaft 40 is assembled to the buckle body 18 in the state in which both latch rotation shafts 58 of the latch 46 have been respectively inserted into the body shaft receiving sections 60 of both body side walls 26 of the buckle body 18, movement of both latch rotation shafts 58 of the latch 46 toward the device front side is restricted by the support shaft 40, such that both latch rotation shafts 58 of the latch 46 can be prevented from coming out from inside the body shaft receiving sections 60 of both body side walls 26 of the buckle body 18. Thus, there is no need to employ a special member simply to prevent both latch rotation shafts 58 of the latch 46 from coming out from inside the body shaft receiving sections 60 of both body side walls 26 of the buckle body 18, thereby enabling an increase in the number of components to be suppressed, and also enabling an increase in the number of assembly processes to be suppressed.

In the present exemplary embodiment, a device front-rear direction dimension of the buckle device 10 can be made shorter while suppressing a rotation radius dimension of the latch 46 from becoming shorter. This enables the ease of installation of the buckle device 10 in the vehicle to be improved.

In the present exemplary embodiment, the support shaft 40 that supports the device front side portion of the coupling member 42 is supported by both body side walls 26 of the buckle body 18, and the support shaft 40 is provided separated from the body bottom wall 20 of the buckle body 18 toward the device upper side. Namely, the side wall circular holes 38 are respectively formed at the body side walls 26 of the buckle body 18 so as to be separated from the body bottom wall 20 of the buckle body 18 toward the device upper side. This enables the support shaft 40 to be disposed facing the bottom wall hole portion 28 of the buckle body 18 and a device rear side portion of the ejector urging spring 36 provided at the bottom wall hole portion 28, in the device up-down direction. The present exemplary embodiment thereby enables the device front-rear direction dimension of the buckle body 18 to be made shorter and enables the buckle device 10 to be made even more compact, compared to a configuration in which a coupling member that couples together a buckle device and a vehicle body side section is supported by a body bottom wall of a buckle body at the device rear side of a bottom wall hole portion of the buckle body.

In the buckle device 10, components employed in conventional buckle devices can be used for components which are other than the case 12, the buckle body 18, and the latch 46 (components such as the release button 80, the lock piece 74, and the ejector 30). This enables the buckle device 10 to be realized at a low cost.

### Second Exemplary Embodiment

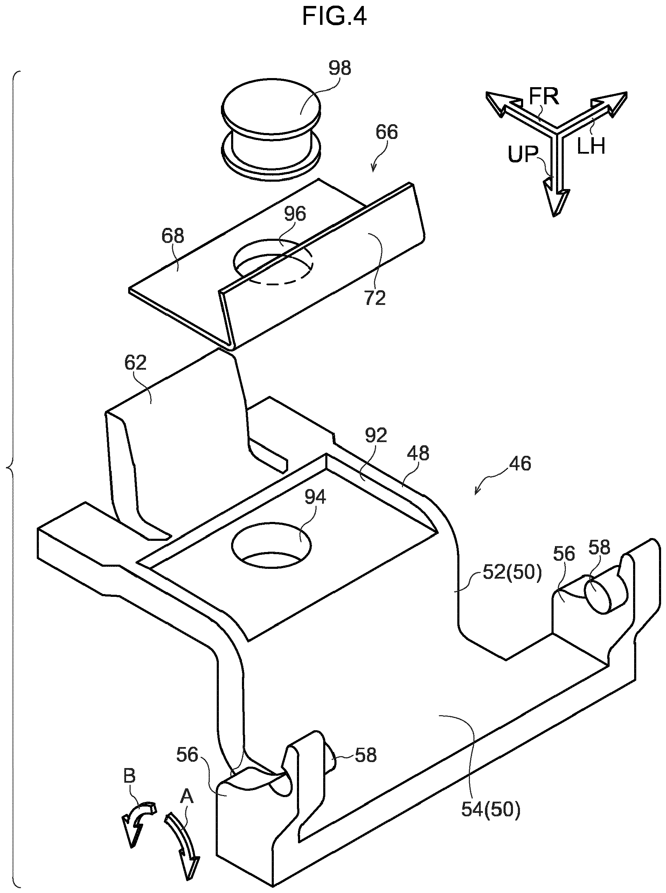

Explanation follows regarding a second exemplary embodiment. As illustrated in Fig. 4, in the present exemplary embodiment, a latch recessed portion 92 is formed in a device lower side portion of the latch base section 48 of the latch 46. The latch recessed portion 92 is open at a device lower side face of the latch base section 48 of the latch 46 and at the device rear side end of the latch base section 48 of the latch 46. The pressure receiving member plate portion 68 of the pressure receiving member 66 is disposed inside the latch recessed portion 92.

A latch hole portion 94 is formed in the latch base section 48 of the latch 46. The latch hole portion 94 pierces through the latch base section 48 in the thickness direction of the latch base section 48 of the latch 46. A pressure receiving member hole portion 96 is formed in the pressure receiving member plate portion 68 of the pressure receiving member 66. The pressure receiving member hole portion 96 pierces through the pressure receiving member plate portion 68 in the thickness direction of the pressure receiving member plate portion 68 of the pressure receiving member 66. In a state in which the pressure receiving member plate portion 68 of the pressure receiving member 66 has been disposed inside the latch recessed portion 92 of the latch 46, the pressure receiving member hole portion 96 of the pressure receiving member 66 faces the latch hole portion 94 of the latch 46. A rivet 98 is disposed piercing through the latch hole portion 94 of the latch 46 and the pressure receiving member hole portion 96 of the pressure receiving member 66, and the latch 46 and the pressure receiving member 66 are fastened and fixed together by the rivet 98.

Thus, the present exemplary embodiment has basically the same configuration as that in the first exemplary embodiment, with the exception of the configuration for attaching the pressure receiving member 66 to the latch 46. The present exemplary embodiment thereby enables basically the same advantageous effects as those in the first exemplary embodiment to be obtained.

### Third Exemplary Embodiment

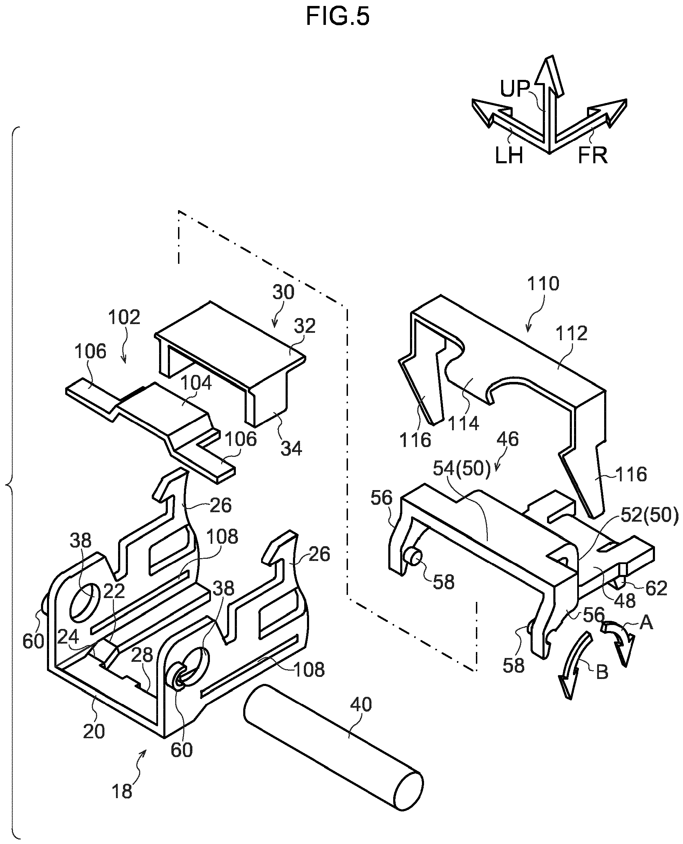

Explanation follows regarding a third exemplary embodiment. As illustrated in Fig. 5, in the present exemplary embodiment, a pressing plate 102 is provided at the ejector 30. The pressing plate 102 includes a pressing plate attachment portion 104. The pressing plate attachment portion 104 is press-fit into the ejector wall portion 34 of the ejector 30 from the device rear side of the ejector 30 so as to fix the pressing plate 102 to the ejector 30. Apair of pressing portions 106 are formed to a device rear side portion of the pressing plate attachment portion 104. The pressing portions 106 are formed in a narrow width plate shape with length direction thereof along the device left-right direction. One pressing portion 106 extends out toward the device left side from the device rear side portion of the pressing plate attachment portion 104, and the other pressing portion 106 extends out toward the device right side from the device rear side portion of the pressing plate attachment portion 104.

Elongated holes 108 that correspond to the pressing portions 106 of the pressing plate 102 are respectively formed in both body side walls 26 of the buckle body 18. The one pressing portion 106 of the pressing plate 102 is passed through the elongated hole 108 in one body side wall 26 of the buckle body 18 and projects out toward the device left side of the buckle body 18, and the other pressing portion 106 of the pressing plate 102 is passed through the elongated hole 108 in the other body side wall 26 of the buckle body 18 and projects out toward the device right side of the buckle body 18. The length direction of the elongated holes 108 runs along the vehicle front-rear direction, and a length direction dimension of each elongated hole 108 is set to a movement stroke in the device front-rear direction of the ejector 30, or greater. The pressing plate 102 is thereby able to move together with the ejector 30.

The present exemplary embodiment includes a pressure receiving member 110 instead of the pressure receiving member 66 of the first exemplary embodiment and second exemplary embodiment. The pressure receiving member 110 includes a pressure receiving member base section 112. The pressure receiving member base section 112 is formed in a narrow width plate shape, and is disposed at the device upper side of the latch bypass section 50 of the latch 46. The length direction of the pressure receiving member base section 112 runs along the device left-right direction, and both length direction end portions of the pressure receiving member base section 112 project out further toward the device left-right direction outsides than both body side walls 26 of the buckle body 18.

A pressure receiving member engagement portion 114 is formed to the pressure receiving member base section 112 of the pressure receiving member 110. The pressure receiving member engagement portion 114 extends out toward the device rear side from a length direction intermediate portion of the pressure receiving member base section 112 of the pressure receiving member 110. A device rear side end portion of the pressure receiving member engagement portion 114 is engaged with, and caulked or crimped to a device rear side end portion of the latch bypass section 50 of the latch 46, thereby fixing the pressure receiving member 110 to the latch 46.

A pair of pressure receiving member abutting tabs 116 are formed to the pressure receiving member base section 112 of the pressure receiving member 110. One pressure receiving member abutting tab 116 extends out toward the device lower side from a device left side end portion of the pressure receiving member base section 112 of the pressure receiving member 110, and is disposed on the device left side of the one body side wall 26 of the buckle body 18. The other pressure receiving member abutting tab 116 extends out toward the device lower side from a device right side end portion of the pressure receiving member base section 112 of the pressure receiving member 110, and is disposed on the device right side of the other body side wall 26 of the buckle body 18. Device lower side end portions of the pressure receiving member abutting tabs 116 of the pressure receiving member 110 respectively face the pressing portions 106 of the pressing plate 102 at the device rear side of the pressing portions 106 of the pressing plate 102 provided at the ejector 30.

In a state in which the ejector 30 has been moved toward the device rear side and the leading end of the latch engagement portion 62 of the latch 46 faces the tongue engagement hole 64 of the tongue 16 due to the ejector 30 being pressed by the tongue 16 when the tongue 16 has been inserted into the case 12, the pressing portions 106 of the pressing plate 102 abut the pressure receiving member abutting tabs 116 of the pressure receiving member 110. When the ejector 30 is pressed further by the tongue 16 in this state, the pressure receiving member abutting tabs 116 of the pressure receiving member 110 are pressed toward the device rear side by the pressing portions 106 of the pressing plate 102, such that the latch 46 is rotated in the latch engagement direction (the arrow A direction in Fig. 5).

Namely, the first exemplary embodiment and the second exemplary embodiment are configured such that the pressure receiving member abutting portion 72 of the pressure receiving member 66 provided at the latch 46 is disposed between both body side walls 26 of the buckle body 18, and the pressure receiving member abutting portion 72 of the pressure receiving member 66 is directly pressed by the ejector 30 so as to rotate the latch 46 in the latch engagement direction. In contrast thereto, the present exemplary embodiment is configured such that the pressure receiving member abutting tabs 116 of the pressure receiving member 110 provided at the latch 46 are disposed further toward the device left-right direction outsides than both body side walls 26 of the buckle body 18, and the pressure receiving member abutting tabs 116 of the pressure receiving member 110 are indirectly pressed by the ejector 30 via the pressing portions 106 of the pressing plate 102 so as to rotate the latch 46 in the latch engagement direction.

Thus, the present exemplary embodiment has basically the same configuration as those in the first exemplary embodiment and second exemplary embodiment, with the exception of the configuration for pressing the pressure receiving member 110 and causing the latch 46 to rotate. The present exemplary embodiment thereby enables basically the same advantageous effects as those in the first exemplary embodiment and second exemplary embodiment to be obtained.

Note that in the first exemplary embodiment, the pressure receiving member 66 is fixed to the latch 46 by caulking or crimping the pressure receiving member attachment tabs 70 of the pressure receiving member 66. In the second exemplary embodiment, the pressure receiving member 66 is fixed to the latch 46 by the rivet 98. In the third exemplary embodiment, the pressure receiving member 110 is fixed to the latch 46 by caulking or crimping the pressure receiving member engagement portion 114 of the pressure receiving member 110. However, the pressure receiving member 66 or the pressure receiving member 110 may be fixed to the latch 46 by welding, may be fixed to the latch 46 by a bolt or the like, or may be fixed to the latch 46 by adhesive or the like. Namely, thereby is no particular limitation to the configuration for fixing the pressure receiving member 66 or the pressure receiving member 110 to the latch 46, and various types of fixing may be broadly applied.

In each of the above exemplary embodiments, the latch 46, and the pressure receiving member 66 or the pressure receiving member 110, are configured as separate bodies. However, a configuration may be applied in which a section having a similar function to the pressure receiving member abutting portion 72 of the pressure receiving member 66 or the pressure receiving member abutting tabs 116 of the pressure receiving member 110 is integrally formed to the latch 46.

Each of the above exemplary embodiments is configured such that the latch rotation shafts 58 of the latch 46 are restricted (prevented) from coming out of the body shaft receiving sections 60 of the body side walls 26 of the buckle body 18 by the support shaft 40. However, a configuration may be applied in which the latch rotation shafts 58 of the latch 46 are restricted (prevented) from coming out of the body shaft receiving sections 60 of the body side walls 26 of the buckle body 18 by a member other than the support shaft 40.

Each of the above exemplary embodiments is configured such that the latch rotation shafts 58, each serving as a rotation shaft, are formed to the latch 46, the body shaft receiving sections 60 are formed to the body side walls 26 of the buckle body 18, and the support shaft 40 abuts the latch rotation shafts 58 of the latch 46. However, for example, a configuration may be applied in which rotation shafts are respectively formed to the body side walls 26 of the buckle body 18, shaft receiving sections are formed to the latch 46, and the support shaft 40 abuts the shaft receiving sections of the latch 46.

Each of the above exemplary embodiments is configured such that the support shaft 40 that is supported by both body side walls 26 of the buckle body 18 faces the device rear side portion of the bottom wall hole portion 28 of the buckle body 18 in the device up-down direction. However, a configuration may be applied in which a coupling portion of a coupling member to a buckle body is provided further toward the device rear side than a bottom wall hole portion of the buckle body, or a configuration may be applied in which a coupling member is coupled to a bottom wall of a buckle body.

Each of the above exemplary embodiments is configured such that the coupling member 42 is formed using a flexible belt shaped member. However, a coupling member may be formed using a plate shaped or a rod shaped metal material, or may be formed using a cord shaped member such as a rope, and there is no limitation to the specific configuration as long as the coupling member has a configuration that can couple the buckle body 18 and the vehicle body side section together.

Each of the above exemplary embodiments is configured such that the support shaft 40 serving as a supporting member faces the ejector urging spring 36 provided in the bottom wall hole portion 28 of the body bottom wall 20 of the buckle body 18 in the device up-down direction (namely, in the thickness direction of the body bottom wall 20 of the buckle body 18). However, the member that a supporting member faces in the thickness direction of a body bottom wall of a buckle body is not limited to the ejector urging spring 36, as long as this member is provided at the body bottom wall of the buckle body.

In a buckle device, latch rotation shafts 58 of a latch 46 are supported by body shaft receiving portions 60 of a buckle body 18 further to the device rear side than a support shaft 40 that supports a buckle device side of a coupling member. The latch 46 is rotated in one direction about the latch rotation shafts 58, such that a latch engagement portion 62 of the latch 46 engages with a tongue further toward the device front side than the support shaft 40. Such a configuration enables a rotation radius of the latch 46 to be suppressed from becoming smaller even if the buckle device is made more compact.

## Claims

1. A buckle device comprising:
a buckle body that is coupled to a coupling member coupled to a vehicle body side; and
a latch that is supported by the buckle body further to one side of the buckle body than a coupling portion where the coupling member is coupled to the buckle body so as to be capable of rotating, and that, by being rotated, is configured to engage with a tongue of a seatbelt device further to another side of the buckle body than the coupling portion.

2. The buckle device of claim 1, further comprising:
a rotation shaft that is provided at one of the buckle body or the latch;
a shaft receiving section that is provided at another of the buckle body or the latch, and that engages with the rotation shaft such that the latch is supported by the buckle body so as to be capable of rotating, a part of the shaft receiving section being open toward a radial direction side of rotation of the latch such the rotation shaft is capable of relative movement toward an open side of the shaft receiving section; and
a restricting section that is provided at the buckle body so as to abut one of the rotation shaft or the shaft receiving section, which is provided at the latch, and that restricts relative movement of the rotation shaft toward the open side of the shaft receiving section.

3. The buckle device of claim 2, wherein the restricting section couples the coupling member to the buckle body.

4. The buckle device of claim 1, wherein:
the buckle body includes a body bottom wall having a thickness direction that intersects with a direction running from the one side to the another side of the buckle body; and
the coupling portion is formed at the buckle body so as to be separated from the body bottom wall in the thickness direction of the body bottom wall.

5. The buckle device of claim 2 or 3, wherein:
the buckle body includes a body bottom wall having a thickness direction that intersects with a direction running from the one side to the another side of the buckle body; and
the restricting section is separated from the body bottom wall in the thickness direction of the body bottom wall.

6. The buckle device of one of claims 2-5, wherein the restricting section is supported at the coupling portion of the buckle body.
